# EUROPEAN PATENT SPECIFICATION

(11) **EP 2 850 450 B1**
(45) Date of publication and mention of the grant of the patent: **07.10.2020**
(21) Application number: 13734841.3
(22) Date of filing: 15.05.2013
(51) Int. Cl.: G01S 5/18, G01S 5/30, A01K 73/04

(54) **TWIN TRAWL GEOMETRY**
DOPPELSCHLEPPNETZGEOMETRIE
GÉOMÉTRIE D'UN CHALUT JUMEAU

(30) Priority: 16.05.2012 NO 20120571
(43) Date of publication of application: 25.03.2015
(73) Proprietor: Scantrawl a.s., 3167 Åsgårdstrand (NO)
(72) Inventor: SKJOLD-LARSEN, Henning, N-3167 Åsgårdstrand (NO)
(74) Representative: Onsagers AS
(86) International application number: PCT/IB2013/053958
(87) International publication number: WO 2013/171683

(56) References cited:
- WO-A1-2010/090526
- SU-A1- 423 442
- US-A1- 2007 091 719

## Description

The invention relates to a system and a method for monitoring a twin trawl being towed by a vessel.

A number of sensor modules are available for use in connection with fishing gear. Examples of such modules are; symmetry sensor, Trawl Eye sensor, trawl sounder, trawl speed sensor, distance sensor, grid sensor, depth sensor, quantity sensor etc. These modules provide information regarding the position of the fishing gear relative to the seabed, its speed, its direction of travel in relation to water flow, the volume of fish inside the fishing gear, etc.

WO2010/090526 describes calculating a difference in distance from a reference point to at least two sensor modules under water.

In order that fishing gear should perform efficiently, it is important that during a fishing operation it has a geometry that is as optimal as possible, for example, that the trawl opening is sufficiently large, that the trawl opening is symmetrical, that the trawl bag is spread and is not twisted or skewed etc.

Moreover, the fishing gear will create a certain acoustic image as it moves in the water. Incorrect positioning of the fishing gear could result in an acoustic image that scares away the fish.

It is therefore important to be able, at all times, to check that the geometry of the fishing gear is correct and that the net meshes are taut, and to be able to take the right decisions and actions from the boat in order to achieve efficient and effective fishing. The geometry of the trawl is normally understood as the size of the trawl's opening (height and width), but may also comprise other values such as water velocity and direction of water flow into the trawl during a fishing operation.

In the case of fishing with two interconnected trawls, a so-called "twin trawl", there are additional challenges associated with the trawl geometry. In a twin trawl, each of the trawls is connected to a trawl door at its outer edge, whilst the adjacent edges of the trawls are connected to a "clump" (centre clump). The trawl doors ensure the trawl bags are kept spread and provide stability of the trawl, whilst the clump is a central weight or a lead, for example, a roller weight, which helps to keep the trawl bags spread.

An optimal geometry for a twin trawl requires that the trawl doors and clump should be essentially in alignment with one another. Optimal spreading of the trawl doors, optimal opening of both trawls and a stable movement of the trawls are then achieved. Another requirement for a trawl to fish efficiently and effectively is that the trawl should move through the sea in such a way as to be symmetrical relative to the water flow entering it. When there is no side current, the trawl will be towed with an opening at 90° to the direction of travel of the vessel. When there is a side current, the trawl must be "towed skewed" such that the opening is not at 90° to the direction of travel, but at an angle thereto determined by the strength of the side current and the speed of the vessel.

The object of the invention is to provide a system and a method for monitoring and checking the trawl geometry of a twin trawl so as to have a basis on which to take the right decisions during a fishing operation and to achieve efficient and effective fishing.

The object of the invention is achieved with the aid of the features set forth in the patent claims.

In an embodiment, a system for monitoring a twin trawl being towed by a vessel, the twin trawl consisting of two trawl bags, two trawl doors and a clump, comprises at least one sensor arrangement for measuring distance between the doors and between a door and the clump, and a processing unit for the computation of geometric indicators based on the measured values.

A method for monitoring a twin trawl being towed by a vessel, the twin trawl comprising two trawl bags, a first and a second trawl door and a clump, comprises the following steps:
- transmitting an acoustic signal from the first trawl door to the second trawl door and to the clump;
- transmitting an acoustic signal from the second trawl door and from the clump after reception of said acoustic signal transmitted from the first trawl door;
- measuring the lengths of time T1 and T2 it takes from when the acoustic signal is transmitted from the first trawl door until the first trawl door receives the acoustic signal transmitted from the second trawl door and the clump, respectively;
- registering the time t2 for reception at the clump of the acoustic signal transmitted from the second trawl door;
- calculating the distance S1 between the first trawl door and the second trawl door and the distance S2 between the first trawl door and the clump, based on the lengths of time T1 and T2;
- calculating the distance S3 between the second trawl door and the clump, based on the time t2 and the length of time T2;
- comparing the distances S2 + S3 with S1.

The sensor arrangement and sensor modules and means for transmitting and registering reception of acoustic signals and measurement of other values may, for example, be catch sensors, which are sensor modules for use in connection with fishing gear. They comprise, in many embodiments, an outer main body containing a sensor device for measuring different values/properties, and fastening devices for attaching the main body to the fishing gear. The sensor device is either fully encased by the main body, arranged on the surface of the main body, or partly contained within the main body.

The sensor modules are as a rule secured to the fishing gear by means of wires, elastic cords or rope, one end of the wire, elastic cord or rope being fastened to the fishing gear and the other end being fastened to the fastening devices. Depending on the type of sensor module, two or more wires, elastic cords or ropes will be used.

The system may comprise a user interface, for example, comprising a screen or monitor for display of data. In an embodiment, geometric indicators are shown on the monitor. The system may further comprise a communications system for transmission of signals between sensor devices, sensor arrangement and processing unit. In an embodiment, the communications system comprises one or more hydrophones, but other wireless communication or communication over one or more cables may also be used. The processing unit may be arranged on the vessel, for example, in a bridge system in a catch monitoring system. A catch monitoring system of this kind may, for example, consist of receiver units, display units/monitors, hydrophones and one or more sensors such as trawl sensors, door sensors, bottom contact sensors, flow sensors, Trawl Eye sensor, trawl sounder etc. The processing unit may be connected to other units and be capable of controlling these units, as for example, winches, propeller pitch, rudder, engine speed, and also angles of trawl doors and weights/clumps.

In an embodiment, the system comprises a sensor device for measuring the angle of the water flow into the opening of at least one of the trawl bags. An angle of 90° indicates that there are no side currents, and that the trawl has a desired geometry, whilst an angle different from 90° indicates that the length of the wires/lines connecting the trawl doors and the clump to the vessel ought to be changed.

In an embodiment, the distances S2+S3 are compared with S1 and the angle of water flow into the opening of at least one of the trawl bags is registered and, based on this, geometric indicators are determined. Geometric indicators are a number /figure/value that gives an indication of the geometry of the trawl, for example, whether the trawl is being towed symmetrically through the water in the direction of travel of the vessel, indicated, for instance, by an angle or an angular deviation (from 90°), or a difference in distance. When the distances S2+S3 are equal to S1, this is an indication that the trawl doors and clump are in alignment with each other. When these distances are not equal, the geometric indicator will tell an operator or a control system that the geometry is not optimal, so that actions can be taken to change the geometry.

By adjusting and positioning the doors and the clump, the geometry of the trawl, including symmetry, can be changed. This can be done by controlling the winches that regulate the length of the wire or line connecting the doors and clump to the vessel.

In an embodiment, the doors and clump are adjusted such that S2+S3 is essentially equal to S1 and/or such that the angle of the water flow into the opening of at least one of the trawl bags is 90°.

In an embodiment, the depth of at least two of the two doors and the clump is measured. This can be done by arranging depth gauges on the trawl doors and/or the clump or in that sensor modules comprise depth gauges. In that case, the doors and the clump can be adjusted and positioned such that the measured depths are essentially identical.

In an embodiment, the temperature of the water is measured using temperature-measuring devices arranged on the doors/clump or in sensor modules, and where calculation of distance is corrected by taking into account the speed of sound at the measured temperature.

The invention will now be described in more detail with the aid of examples and with reference to the attached figures.
- Figure 1: illustrates a vessel towing a twin trawl.
- Figure 2: illustrates distance measurement for monitoring a twin trawl.

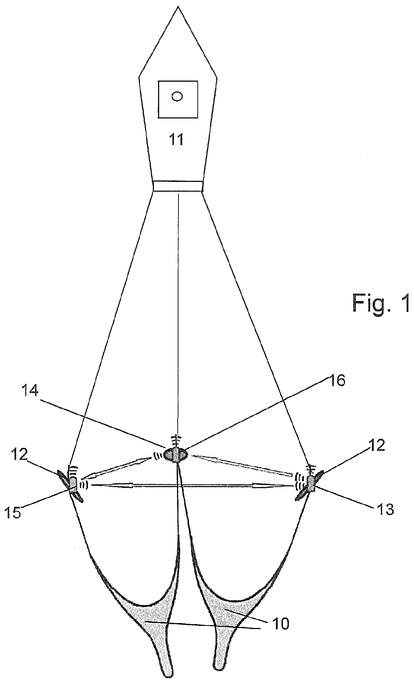

Figure 1 illustrates a vessel 11 towing a twin trawl consisting of two trawl bags 10, two trawl doors 12 (a first and a second door), and a centre clump 14. Sensor modules 13, 15 are arranged on the doors 12 and a sensor module 16 is arranged on the clump 14. The sensor modules comprise means for transmitting and receiving acoustic signals. The sensor modules 16 on the clump and 13 on the starboard trawl door may, in one embodiment, be a simple transponder, but may also comprise several types of sensor devices and other desired tools. The sensor module 15 on the port trawl door may, for example, be a double distance sensor capable of transmitting an acoustic signal and calculating the distance based on the time it takes from when the acoustic signal is transmitted until a signal is received from the transponders on the clump 14 and the starboard trawl door 12. In addition, the sensor module 15 may comprise further sensors. Examples of sensors that can be included in the sensor modules 13, 15 and 16 are depth sensors and temperature sensors.

In addition, a symmetry sensor 17 is arranged on the port trawl. A symmetry sensor is a sensor that indicates the angle of the jet of water entering the opening of the trawl bag.

Often the vessel 11 will be equipped with a catch control system capable of communicating with the sensor modules. Communication may be acoustic by means of hydrophones, cabled or by using another type of wireless signal transmission. The catch control system may comprise a processing unit able to receive raw data and calculated distances or to calculate distances itself. Based on received signals, the processing unit is able to display information on a monitor or other type of user interface. The information displayed to the user may be processed information, for example, calculated distances, comparison of distances, such as addition or subtraction, or other types of geometric indicators, or raw data can be displayed directly to the user. The processing unit may be connected to other equipment for sending signals to or controlling the equipment.

In the figure both trawl bags are out of the desired position and the trawl doors 12 and clump 14 are not in alignment with each other. In a desired position to obtain optimal spreading of the doors, optimal opening of the trawls and a stable movement of the trawls, the trawl doors 12 and the clump 14 will be in alignment with each other.

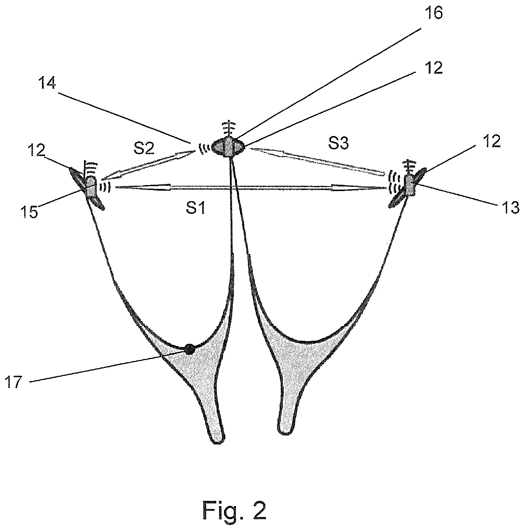

Figure 2 illustrates an example of measurements for monitoring a twin trawl and providing one or more geometric indicators that provide an indication or description of the geometry of the trawl.

An acoustic signal is transmitted from the first trawl door 12 to/in the direction of the second trawl door 12' and to the clump 14. When they register reception of the acoustic signal, an acoustic signal is transmitted from the second trawl door 12' and from the clump 14, i.e., after reception of the said acoustic signal transmitted from the first trawl door. At the first trawl door, the lengths of time (T1 and T2) it takes from when the acoustic signal is transmitted from the first trawl door 12 until the first trawl door 12 receives the acoustic signal transmitted from the second trawl door 12' and the clump 14 are measured. In addition, the time t2 for reception at the clump of the acoustic signal sent from the second trawl door 12' is registered. This registration of the time t2 can be effected at the clump and sent to the first trawl door 12 or it can be sent to another position, for example, the vessel towing the trawl.

The measured lengths of time T1 and T2 can then be used to calculate the distance S1 between the first trawl door and the second trawl door and the distance S2 between the first trawl door and the clump. The distance S3 between the second trawl door and the clump can also be calculated, based on the time t2 and the length of time T2. A comparison of the distances calculated will then give an indication of the geometry of the trawl. By, for example, comparing the distances S2 + S3 and S1, an indication can be obtained of whether the trawl doors and the clump are in alignment with each other. If S2+S3=S 1, they are alignment with each other, whilst if S2+S3≠S1, they are not in alignment with each other, and there may be reason to act, for example, paying out one of the lines.

In some cases, the lines can be connected to controllable winches which regulate the length of the wire or line connecting the doors and the clump to the vessel. In these cases, the processing unit may send signals to the winches in order to adjust and position the doors and the clump by controlling the winches so as to obtain the desired distances. In other cases, a bridge system or catch control system on the vessel can display computed geometric indicators or calculated distances, thereby enabling an operator to take suitable actions.

## Claims

1. A system for monitoring a twin trawl being towed by a vessel (11), the twin trawl comprising two trawl bags (10), two trawl doors (12) and a clump (14), wherein the system comprises:
- at least one sensor arrangement comprising sensors (13, 15, 16) at trawl doors (12) connected to each trawl at their outer edge, and at a clump (14) connected to the adjacent edges of the trawls and
- a processing unit configured for computing geometric indicators based on the measured values ***characterized in* that** the sensor arrangement comprises transmitters configured for transmitting an acoustic signal from the first trawl door to the second trawl door and to the clump and configured for transmitting an acoustic signal from the second trawl door and from the clump after reception of said acoustic signal transmitted from the first trawl door; the sensor arrangement being configured for measuring the lengths of time T1 and T2 it takes from when the acoustic signal is transmitted from the first trawl door until the first trawl door receives the acoustic signal transmitted from the second trawl door and the clump, respectively and configured for calculating the distance S1 between the first trawl door and the second trawl door and the distance S2 between the first trawl door and the clump, based on the lengths of time T1 and T2; and configured for registering the time t₂ for reception at the clump of the acoustic signal sent from the second trawl door, and for calculating the distance S3 between the second trawl door and the clump based on the time t2 and the length of time T2; and for comparing the distances S2 + S3 with S1.

2. A system according to claim 1, comprising at least one sensor device configured for measuring the angle of the water flow into the opening of at least one of the trawl bags (10).

3. A system according to claim 1, comprising at least one temperature sensor arranged on at least one of the trawl bags (10) or doors (12).

4. A system according to claim 1, comprising depth sensors located on the trawl doors (12) and the centre weight.

5. A system according to claim 1, comprising a user interface comprising at least a monitor.

6. A system according to claim 2, comprising a communications system for transmitting signals, such as measuring signals, between sensor device, sensor arrangement and processing unit.

7. A system according to claim 1, wherein the sensor arrangement for measuring distance between the doors (12) and between a door (12) and the clump (14) comprises a transmitter configured for transmitting an acoustic signal arranged on a first door and a transponder arranged on each of a second door and the clump (14) configured for transmission of an acoustic signal in response to reception of the acoustic signal transmitted from the first door.

8. A system according to claim 1, comprising controllable winches configured for regulating the length of the wire or line connecting the doors (12) and the clump (14) to the vessel, and wherein the processing unit is adapted to adjust and position the doors and the clump by controlling the winch.

9. A method for monitoring a twin trawl being towed by a vessel, the twin trawl comprising two trawl bags, a first and a second trawl door and a clump, **characterized in that** the method comprises the following steps:
- transmitting an acoustic signal from the first trawl door to the second trawl door and to the clump;
- transmitting an acoustic signal from the second trawl door and from the clump after reception of said acoustic signal transmitted from the first trawl door; - measuring the lengths of time T1 and T2 it takes from when the acoustic signal is transmitted from the first trawl door until the first trawl door receives the acoustic signal transmitted from the second trawl door and the clump, respectively;
- registering the time t2 for reception at the clump of the acoustic signal sent from the second trawl door;
- calculating the distance S1 between the first trawl door and the second trawl door and the distance S2 between the first trawl door and the clump, based on the lengths of time T1 and T2;
- calculating the distance S3 between the second trawl door and the clump based on the time t2 and the length of time T2;
- comparing the distances S2 + S3 with S1.

10. A method according to claim 9, further comprising measuring the angle of the water flow into the opening of at least one of the trawl bags.

11. A method according to claim 10, comprising determining geometric indicators based on the comparison of the distances S2+S3 and S1 and the angle of the water flow into at least one of the trawl bags.

12. A method according to one of claims 9-11, comprising adjusting and positioning the doors and the clump by controlling the winches that regulate the length of the wire or line connecting the doors and the clump to the vessel.

13. A method according to claim 12, wherein the doors and the clump are adjusted and positioned such that S2+S3 is essentially equal to S1 and the angle of the water flow into the opening of at least one of the trawl bags is 90°.

14. A method according to one of claims 9-13, comprising measuring the depth of at least two of the two doors and the clump.

15. A method according to claim 14, wherein the doors and the clump are adjusted and positioned such that the measured depths are essentially identical.

16. A method according to claim 9, comprising measuring the temperature of the water and where calculation of distance is corrected by taking into account the sound of speed at the measured temperature.

## Patentansprüche

1. System zum Überwachen eines Doppelschleppnetzes, das von einem Schiff (11) geschleppt wird, wobei das Doppelschleppnetz zwei Schleppnetzbeutel (10), zwei Schleppnetztüren (12) und einen Klumpblock (14) umfasst, wobei das System umfasst:
mindestens eine Sensoranordnung mit Sensoren (13, 15, 16) an Schleppnetztüren (12), die mit jedem Schleppnetz an ihrer Außenkante verbunden sind, und an einem mit den benachbarten Kanten der Schleppnetze verbundenen Klumpblock (14) und
eine Verarbeitungseinheit, die so konfiguriert ist, dass sie geometrische Indikatoren auf der Grundlage der gemessenen Werte berechnet, **dadurch gekennzeichnet, dass** die Sensoranordnung Sender umfasst, die so konfiguriert sind, dass sie ein akustisches Signal von der ersten Schleppnetztür zur zweiten Schleppnetztür und zum Klumpblock senden, und die so konfiguriert sind, dass sie nach Empfang des von der ersten Schleppnetztür gesendeten akustischen Signals ein akustisches Signal von der zweiten Schleppnetztür und vom Klumpblock senden;
wobei die Sensoranordnung so konfiguriert ist, dass sie die Zeitspannen T1 und T2 misst, die von dem Zeitpunkt, an dem das akustische Signal von der ersten Schleppnetztür gesendet wird, bis zu dem Zeitpunkt, an dem die erste Schleppnetztür das von der zweiten Schleppnetztür bzw. dem Klumpblock gesendete akustische Signal empfängt, benötigt werden, und so konfiguriert ist, dass sie die Distanz S1 zwischen der ersten Schleppnetztür und der zweiten Schleppnetztür und die Distanz S2 zwischen der ersten Schleppnetztür und dem Klumpblock auf der Grundlage der Zeitspannen T1 und T2 berechnet;
und die konfiguriert ist zum Registrieren der Zeit t2 für den Empfang des akustischen Signals, das von der zweiten Schleppnetztür gesendet wird, an dem Klumpblock, und zum
Berechnen der Distanz S3 zwischen der zweiten Schleppnetztür und dem Klumpblock basierend auf der Zeit t2 und der Zeitspanne T2; und zum
Vergleichen der Distanzen S2 + S3 mit S1.

2. System nach Anspruch 1, umfassend mindestens eine Sensorvorrichtung, die zum Messen des Winkels des Wasserstroms in die Öffnung von mindestens einem der Schleppnetzbeutel (10) konfiguriert ist.

3. System nach Anspruch 1, umfassend mindestens einen Temperatursensor, der an mindestens einem aus den Schleppnetzbeuteln (10) oder Türen (12) angeordnet ist.

4. System nach Anspruch 1, umfassend Tiefensensoren, die an den Schleppnetztüren (12) und dem Mittelgewicht angeordnet sind.

5. System nach Anspruch 1, umfassend eine Benutzerschnittstelle, die mindestens einen Monitor umfasst.

6. System nach Anspruch 2, umfassend ein Kommunikationssystem zum Senden von Signalen, wie beispielsweise Messsignalen, zwischen der Sensorvorrichtung, der Sensoranordnung und der Verarbeitungseinheit.

7. System nach Anspruch 1, wobei die Sensoranordnung zum Messen der Distanz zwischen den Türen (12) und zwischen einer Tür (12) und dem Klumpblock (14) einen Sender umfasst, der zum Senden eines akustischen Signals konfiguriert ist, der an einer ersten Tür angeordnet ist, und einen Transponder, der an jedem aus einer zweiten Tür und dem Klumpblock (14) angeordnet und zum Senden eines akustischen Signals in Reaktion auf den Empfang des von der ersten Tür gesendeten akustischen Signals konfiguriert ist.

8. System nach Anspruch 1, umfassend steuerbare Winschen, die zum Regulieren der Länge des Drahtes oder der Leine ausgelegt sind, welche die Türen (12) und den Klumpblock (14) mit dem Schiff verbinden, und wobei die Verarbeitungseinheit dazu eingerichtet ist, die Türen und den Klumpblock durch Steuern der Winsch einzustellen und zu positionieren.

9. Verfahren zum Überwachen eines Doppelschleppnetzes, das von einem Schiff geschleppt wird, wobei das Doppelschleppnetz zwei Schleppnetzbeutel, eine erste und eine zweite Schleppnetztür und einen Klumpblock umfasst, **dadurch gekennzeichnet, dass** das Verfahren folgende Schritte umfasst:
Senden eines akustischen Signals von der ersten Schleppnetztür zu der zweiten Schleppnetztür und zu dem Klumpblock;
Senden eines akustischen Signals von der zweiten Schleppnetztür und von dem Klumpblock nach dem Empfang des von der ersten Schleppnetztür gesendeten akustischen Signals;
Messen der Zeitspannen T1 und T2, die von dem Zeitpunkt, an dem das akustische Signal von der ersten Schleppnetztür gesendet wird, bis zu dem Zeitpunkt, an dem die erste Schleppnetztür das von der zweiten Schleppnetztür bzw. dem Klumpblock gesendete akustische Signal empfängt, benötigt werden;
Registrieren der Zeit t2 für den Empfang des akustischen Signals, das von der zweiten Schleppnetztür gesendet wird, an dem Klumpblock;
Berechnen der Distanz S1 zwischen der ersten Schleppnetztür und der zweiten Schleppnetztür sowie der Distanz S2 zwischen der ersten Schleppnetztür und dem Klumpblock basierend auf den Zeitspannen T1 und T2;
Berechnen der Distanz S3 zwischen der zweiten Schleppnetztür und dem Klumpblock basierend auf der Zeit t2 und der Zeitspanne T2;
Vergleichen der Distanzen S2 + S3 mit S1.

10. Verfahren nach Anspruch 9, des Weiteren umfassend das Messen des Winkels des Wasserstroms in die Öffnung von mindestens einem der Schleppnetzbeutel.

11. Verfahren nach Anspruch 10, umfassend das Bestimmen von geometrischen Indikatoren basierend auf dem Vergleich der Distanzen S2 + S3 und S1 und dem Winkel des Wasserstroms in mindestens einen der Schleppnetzbeutel.

12. Verfahren nach einem der Ansprüche 9 bis 11, umfassend das Einstellen und Positionieren der Türen und des Klumpblocks durch Steuern der Winschen, welche die Länge des Drahtes oder der Leine regulieren, die die Türen und den Klumpblock mit dem Schiff verbinden.

13. Verfahren nach Anspruch 12, wobei die Türen und der Klumpblock so eingestellt und positioniert werden, dass S2 + S3 im Wesentlichen gleich S1 ist und der Winkel des Wasserstroms in die Öffnung von mindestens einem der Schleppnetzbeutel 90° beträgt.

14. Verfahren nach einem der Ansprüche 9 bis 13, umfassend das Messen der Tiefe von mindestens zwei aus den zwei Türen und dem Klumpblock.

15. Verfahren nach Anspruch 14, wobei die Türen und der Klumpblock so eingestellt und positioniert werden, dass die gemessenen Tiefen im Wesentlichen identisch sind.

16. Verfahren nach Anspruch 9, umfassend das Messen der Wassertemperatur, und wobei die Berechnung der Distanz durch Berücksichtigung der Schallgeschwindigkeit bei der gemessenen Temperatur korrigiert wird.

## Revendications

1. Système de surveillance d'un chalut jumeau qui est remorqué par un navire (11), le chalut jumeau comprenant deux filets de chalut (10), deux panneaux de chalut (12) et un lest (14), lequel système comprend :
- au moins un agencement de capteurs comprenant des capteurs (13, 15, 16) au niveau de panneaux de chalut (12) raccordés à chaque chalut à leur bord externe, et au niveau d'un lest (14) raccordé aux bords adjacents des chaluts, et
- un dispositif de traitement configuré pour calculer des indicateurs géométriques sur la base des valeurs mesurées,
**caractérisé en ce que** l'agencement de capteurs comprend des transmetteurs configurés pour transmettre un signal acoustique depuis le premier panneau de chalut vers le second panneau de chalut et vers le lest et configurés pour transmettre un signal acoustique depuis le second panneau de chalut et depuis le lest après la réception dudit signal acoustique transmis depuis le premier panneau de chalut ;
l'agencement de capteurs étant configuré pour mesurer les longueurs de temps T1 et T2 qu'il faut à compter du moment où le signal acoustique est transmis depuis le premier panneau de chalut jusqu'à ce que le premier panneau de chalut reçoive le signal acoustique transmis depuis le second panneau de chalut et le lest, respectivement, et configuré pour calculer la distance S1 entre le premier panneau de chalut et le second panneau de chalut et la distance S2 entre le premier panneau de chalut et le lest, sur la base des longueurs de temps T1 et T2 ;
et configuré pour enregistrer le temps t₂ pour la réception, au niveau du lest, du signal acoustique envoyé par le second panneau de chalut, et pour calculer la distance S3 entre le second panneau de chalut et le lest sur la base du temps t2 et de la longueur de temps T2 ; et pour comparer les distances S2 + S3 avec S1.

2. Système selon la revendication 1, comprenant au moins un dispositif capteur configuré pour mesurer l'angle d'écoulement de l'eau dans l'ouverture de l'un au moins parmi les filets de chalut (10).

3. Système selon la revendication 1, comprenant au moins un capteur de température agencé sur au moins l'un des filets (10) ou panneaux (12) de chalut.

4. Système selon la revendication 1, comprenant des capteurs de profondeur se trouvant sur les panneaux de chalut (12) et le poids central.

5. Système selon la revendication 1, comprenant une interface utilisateur comprenant au moins un écran d'ordinateur.

6. Système selon la revendication 2, comprenant un système de communication pour transmettre des signaux, tels des signaux de mesure, entre le dispositif capteur, l'agencement de capteurs et le dispositif de traitement.

7. Système selon la revendication 1, dans lequel l'agencement de capteurs pour mesurer la distance entre les panneaux (12) et entre un panneau (12) et le lest (14) comprend un transmetteur configuré pour transmettre un signal acoustique agencé sur un premier panneau, et un transpondeur agencé sur chacun parmi un second panneau et le lest (14) configuré pour la transmission d'un signal acoustique en réponse à la réception du signal acoustique transmis depuis le premier panneau.

8. Système selon la revendication 1, comprenant des treuils contrôlables configurés pour réguler la longueur du câble ou de la ligne raccordant les panneaux (12) et le lest (14) au navire, et dans lequel le dispositif de traitement est adapté pour ajuster et positionner les panneaux et le lest en contrôlant le treuil.

9. Procédé pour surveiller un chalut jumeau qui est remorqué par un navire, le chalut jumeau comprenant deux filets de chalut, un premier et un second panneaux de chalut et un lest, le procédé étant **caractérisé en ce qu'**il comprend les étapes suivantes :
- transmission d'un signal acoustique depuis le premier panneau de chalut jusqu'au second panneau de chalut et au lest ;
- transmission d'un signal acoustique depuis le second panneau de chalut et depuis le lest après réception dudit signal acoustique transmis depuis le premier panneau de chalut ;
- mesure des longueurs de temps T1 et T2 qu'il faut à compter du moment où le signal acoustique est transmis depuis le premier panneau de chalut jusqu'à ce que le premier panneau de chalut reçoive le signal acoustique transmis depuis le second panneau de chalut et le lest, respectivement ;
- enregistrement du temps t2 pour la réception, au niveau du lest, du signal acoustique envoyé par le second panneau de chalut ;
- calcul de la distance S1 entre le premier panneau de chalut et le second panneau de chalut et de la distance S2 entre le premier panneau de chalut et le lest, sur la base des longueurs de temps T1 et T2 ;
- calcul de la distance S3 entre le second panneau de chalut et le lest sur la base du temps t2 et de la longueur de temps T2 ;
- comparaison des distances S2 + S3 avec S1.

10. Procédé selon la revendication 9, comprenant en outre la mesure de l'angle d'écoulement de l'eau dans l'ouverture de l'un au moins parmi les filets de chalut.

11. Procédé selon la revendication 10, comprenant la détermination d'indicateurs géométriques sur la base de la comparaison des distances S2+S3 et S1 et l'angle d'écoulement de l'eau dans au moins un parmi les filets de chalut.

12. Procédé selon l'une des revendications 9 à 11, comprenant l'ajustement et le positionnement des panneaux et du lest en contrôlant les treuils qui régulent la longueur du câble ou de la ligne raccordant les panneaux et le lest au navire.

13. Procédé selon la revendication 12, dans lequel les panneaux et le lest sont ajustés et positionnés de sorte que S2+S3 est essentiellement égal à S1 et l'angle d'écoulement de l'eau dans l'ouverture d'un au moins parmi les panneaux de chalut est de 90°.

14. Procédé selon l'une des revendications 9 à 13, comprenant la mesure de la profondeur d'au moins deux parmi les deux panneaux et le lest.

15. Procédé selon la revendication 14, dans lequel les panneaux et le lest sont ajustés et positionnés de sorte que les profondeurs mesurées soient essentiellement identiques.

16. Procédé selon la revendication 9, comprenant la mesure de la température de l'eau et dans lequel le calcul de distance est corrigé en prenant en compte la vitesse du son à la température mesurée.
